# EUROPÄISCHE PATENTSCHRIFT

(11) **EP 2 825 682 B1**
(45) Veröffentlichungstag und Bekanntmachung des Hinweises auf die Patenterteilung: **09.03.2016**
(21) Anmeldenummer: 12809151.9
(22) Anmeldetag: 07.12.2012
(51) Int. Cl.: C23C 8/02, C23C 8/80, F16J 9/26

(54) **KOLBENRING MIT CHROM-FESTSTOFFPARTIKEL-VERSCHLEIßSCHUTZSCHICHT UND KORROSIONSBESTÄNDIGER FLANKENFLÄCHE**
PISTON RING WITH CHROMIUM SOLID PARTICLE WEAR-PREVENTION LAYER AND CORROSION-RESISTANT FLANK SURFACE
SEGMENT DE PISTON DOTÉ D'UNE COUCHE ANTI-USURE À BASE DE PARTICULES SOLIDES/CHROME ET D'UNE FACE DE FLANC RÉSISTANTE À LA CORROSION

(30) Priorität: 16.03.2012 DE 102012204156
(43) Veröffentlichungstag der Anmeldung: 21.01.2015
(73) Patentinhaber: Federal-Mogul Burscheid GmbH, 51399 Burscheid (DE)
(72) Erfinder: HERBST-DEDERICHS, Christian, 53332 Bornheim (DE); URBATZKA, Waldemar, 51399 Burscheid (DE); DÜRDOTH, Stefan, 51399 Burscheid (DE); ESSER, Peter-Klaus, 51515 Kürten (DE)
(74) Vertreter: Patentanwälte Geyer, Fehners & Partner mbB
(86) Internationale Anmeldenummer: PCT/EP2012/074839
(87) Internationale Veröffentlichungsnummer: WO 2013/135325

(56) Entgegenhaltungen:
- WO-A1-03/098079
- DE-A1- 10 207 148
- DE-A1-102007 038 188
- DE-B3-102008 017 270

## Beschreibung

Die Erfindung bezieht sich auf einen Kolbenring, dessen erste Flankenfläche eine Nitrierdiffusionsschicht und darüber angeordnet eine Nitrierverbindungsschicht und eine Oxidschicht aufweist, dessen zweite Flankenfläche eine Nitrierdiffusionsschicht und dessen äußere Umfangsfläche eine Nitrierdiffusionsschicht und darüber als Verschleißschutzschicht eine Chrom-Feststoffpartikel-Schicht aufweist.

In Verbrennungsmotoren, die nach dem Prinzip der Kolbenhubmaschine arbeiten, führt die Gleitbewegung des Kolbens und der sich in den Kolbennuten befindlichen Kolbenringe, welche die Aufgabe der Abdichtung des Systems in der Form sicherstellen, daß die Brenngase nicht am Kolben vorbei in das Kurbelgehäuse gelangen, zu einem Verschleiß der beteiligten Reibpartner. Dies sind hauptsächlich der Zylinder und die darauf gleitenden Kolbenringe.

Insbesondere der dem Verbrennungsraum am nächsten gelegene, erste Kolbenring ist sehr hohen thermischen Belastungen und Verbrennungsdrücken ausgesetzt. Dies führt vor allem an der dem Brennraum zugewandten Flankenfläche des ersten Kolbenrings zu einer erhöhten Korrosion und einem erhöhten Verschleiß. Für den ersten Kolbenring kommt erschwerend hinzu, daß dieser Ring unter den schlechtesten Schmierbedingungen laufen muß. Um diese extremen Anforderungen zu erfüllen, können die Flankenflächen für eine erhöhte Verschleißfestigkeit gehärtet werden. Auf die äußere Umfangsfläche von Kolbenringen, die als Lauffläche fungiert, können Verschleißschutzbeschichtungen aufgebracht werden, beispielsweise aus Hartchrom.

In der gattungsgemäßen DE 10 2005 041 408 A1 ist ein Kolbenring beschrieben, dessen Oberfläche mit einer gehärteten Schicht versehen ist, wobei zum Härten ein Nitrier- oder Chromnitrierverfahren eingesetzt werden kann und auf dessen Flankenflächen oder der äußeren Umfangsfläche eine Verschleißschutzschicht aufgebracht sein kann.

Solche Kolbenringe weisen eine erhöhte Härte an den nitrierten Flankenflächen auf. Nitrierte Oberflächen besitzen jedoch den Nachteil einer nur geringen Korrosionsbeständigkeit, weil sich aufgrund der Bindung der Passivierungselemente auf natürliche Art und Weise keine Oxidschutzschicht mehr bilden kann. Die Korrosionsbeständigkeit der oberen Flankenfläche und die Verschleißbeständigkeit der äußeren Umfangsfläche solcher Kolbenringe sind daher noch verbesserungsbedürftig.

Der vorliegenden Erfindung liegt daher die Aufgabe zugrunde, einen Kolbenring bereitzustellen mit hoch verschleißfester äußerer Umfangsfläche und einer Flankenfläche, die gleichzeitig eine hohe Härte und eine hohe Korrosionsbeständigkeit aufweist.

Erfindungsgemäß wird diese Aufgabe gelöst durch einen Kolbenring mit einem Grundkörper aus Chromstahl mit mehr als 10 Gew.-% Chrom, der eine innere Umfangsfläche, eine erste Flankenfläche, eine zweite Flankenfläche und eine äußere Umfangsfläche aufweist, wobei die erste Flankenfläche eine Nitrierdiffusionsschicht mit einer Schichtdicke von 5 - 300 µm, eine unmittelbar darüber angeordnete Nitrierverbindungsschicht mit einer Schichtdicke von 0,5-15 µm und eine unmittelbar darüber angeordnete Oxidschicht mit einer Schichtdicke von 0,05 - 3 µm umfaßt, die zweite Flankenfläche die Nitrierdiffusionsschicht und die äußere Umfangsfläche die Nitrierdiffusionsschicht und eine darüber angeordnete Chrom-Feststoffpartikel-Schicht mit 0,1 - 30 Vol.-% Feststoffpartikeln, bezogen auf das Gesamtvolumen der Chrom-Feststoffpartikel-Schicht, umfaßt.

Die Aufgabe wird weiter gelöst durch ein Verfahren zur Herstellung eines Kolbenrings, umfassend die Schritte, daß ein metallischer Grundkörper eines Kolbenrings, der eine innere Umfangsfläche, eine erste Flankenfläche, eine zweite Flankenfläche und eine äußere Umfangsfläche aufweist (a) in einem kombinierten Nitrier-Oxidationsprozeß unter einer mindestens eine Stickstoffverbindung enthaltenden Atmosphäre auf mindestens 300 °C erhitzt, anschließend Luft zugeführt und der Kolbenring in Gegenwart der Luft abgekühlt wird, wodurch auf zumindest der ersten Flankenfläche, der zweiten Flankenfläche und der äußeren Umfangsfläche eine Nitrierdiffusionsschicht, eine darüber angeordnete Nitrierverbindungsschicht und eine darüber angeordnete Oxidschicht erzeugt wird und (b) der Kolbenring anschließend in einen wäßrigen Elektrolyt eingebracht wird, der Chrom in Ionenform und Feststoffpartikel enthält und auf zumindest die äußere Umfangsfläche elektrochemisch eine Chrom-Feststoffpartikel-Schicht abgeschieden wird.

Der mehrlagige Schichtaufbau der ersten Flankenfläche aus Nitrierdiffusionsschicht, Nitrierverbindungsschicht und Oxidschicht weist überraschenderweise eine sehr hohe

Korrosionsbeständigkeit auf, wobei die Härte der Oberfläche, die durch die Nitrierschichten erzeugt wird, erhalten bleibt.

Unter einer Nitrierdiffusionsschicht wird im Sinne der Erfindung eine Schicht verstanden, die Eisennitride, Chromnitride und/oder Eisen-Chromnitride umfaßt, die in den Chromstahl des Grundkörpers eingelagert sind. Unter einer Nitrierverbindungsschicht wird im Sinne der Erfindung eine Schicht verstanden mit ≥ 90 Gew.-% Eisennitriden, Chromnitriden und/oder Eisen-Chromnitriden, bezogen auf das Gesamtgewicht der Nitrierverbindungsschicht. Unter einer Oxidschicht wird im Sinne der Erfindung eine Schicht verstanden mit ≥ 90 Gew.-% Eisenoxiden, Chromoxiden und Eisen-Chromoxiden, bezogen auf das Gesamtgewicht der Oxidschicht.

Beispiele für Eisennitride sind Fe₄N, FeN, Fe₂N₃ und Fe₂N. Beispiele für Chromnitride sind CrN und Cr₂N und Beispiele für Eisen-Chromnitride sind Fe₄CrN und FeCr₂N₃. Beispiele für Eisen- und Chromoxide sind insbesondere Fe₂O₃, Fe₃O₄ sowie Cr₂O₃ und Cr₃O₄.

Der Grundkörper des erfindungsgemäßen Kolbenrings umfaßt Chromstahl mit mehr als 10 Gew.-% Chrom, bevorzugt 11-20 Gew.-% Chrom, bezogen auf die Gesamtmasse des Grundkörpers. Bevorzugt ist martensitischer Chromstahl.

Die Nitrierdiffusionsschicht und die Nitrierverbindungsschicht, die im Nitrierschritt des kombinierten Nitrier-Oxidationsprozesses erzeugt werden, umfassen Eisen-, Chrom- und/oder Eisen-Chromnitride, die durch die Reaktion stickstoffhaltiger Verbindungen im Nitrierschritt aus den Bestandteilen Eisen und Chrom des Chromstahls entstehen. Während die Nitrierverbindungsschicht im wesentlichen aus Eisen-, Chrom- und/oder Eisen-Chromnitriden besteht, besteht die Nitrierdiffusionsschicht im wesentlichen noch aus dem Chromstahl des Grundkörpers, in den die Eisennitride, Chromnitride und/oder Eisen-Chromnitride eingelagert sind. Während des Nitrierprozesses diffundieren die stickstoffhaltigen Verbindungen in den Chromstahl ein und bilden dort Eisen-, Chrom- und/oder Eisen-Chromnitride.

Die Konzentration der Eisen-, Chrom- und/oder Eisen-Chromnitride in der Nitrierdiffusionsschicht liegt insgesamt in der Regel im Bereich von etwa 0,1 - 5 Gew.%, bezogen auf das Gesamtgewicht der Nitrierdiffusionsschicht. Ferner steigt die Konzentration der Eisen-, Chrom- und/oder Eisen-Chromnitride in der Nitrierdiffusionsschicht in der Regel von innen nach außen an, vorzugsweise von etwa 10⁻⁵ - 10⁻³ Gew.-% auf etwa 1-15 Gew.%. In der über der Nitrierdiffusionsschicht angeordneten Nitrierverbindungsschicht ist die Konzentration der Eisen-, Chrom- und/oder Eisen-Chromnitride deutlich höher und liegt bei ≥ 90 Gew.%, vorzugsweise ≥ 95 Gew.%, bezogen auf das Gesamtgewicht der Nitrierverbindungsschicht.

Nitrierdiffusionsschicht und Nitrierverbindungsschicht können weitere Nitride enthalten, die aus weiteren Bestandteilen des Chromstahls, z.B. Legierungsbestandteilen entstehen.

Im Oxidationsschritt des kombinierten Nitrier-Oxidationsverfahrens entstehen aus den Nitriden Oxide, und die Oxidschicht umfaßt so ≥ 90 Gew.-% Eisen-, Chrom- und Eisen-Chromoxide, bevorzugt ≥ 95 Gew.-% Eisen-, Chrom- und Eisen-Chromoxide, bezogen auf das Gesamtgewicht der Oxidschicht.

Die Schichtdicke der Nitrierdiffusionsschicht beträgt 5 - 300 µm, bevorzugt 10 - 200 µm, insbesondere 20 - 150 µm. Die Schichtdicke der Nitrierverbindungsschicht beträgt 0,5 - 15 µm, bevorzugt 1-10 µm, insbesondere 2 - 8 µm und die Schichtdicke der Oxidschicht 0,05 - 3 µm, bevorzugt 0,1 - 2 µm, insbesondere 0,2 -1,5 µm.

Die erste Flankenfläche des erfindungsgemäßen Kolbenrings, die bevorzugt als obere, d.h. dem Brennraum zugewandte Flankenfläche fungiert, weist einen dreilagigen Schichtaufbau auf, umfassend die oben beschriebene Nitrierdiffusionsschicht, die unmittelbar darüber angeordnete Nitrierverbindungsschicht und die unmittelbar darüber angeordnete Oxidschicht. Die Oxidschicht ist dabei für die hohe Korrosionsbeständigkeit der ersten Flankenfläche verantwortlich.

Die zweite Flankenfläche, die im Betrieb bevorzugt als dem Brennraum abgewandte Flankenfläche fungiert, umfaßt die Nitrierdiffusionsschicht und kann den weiteren Schichtaufbau der ersten Flankenfläche aufweisen. Bevorzugt umfaßt die zweite Flankenfläche jedoch keine Oxidschicht und weiter bevorzugt eine Nitrierverbindungsschicht mit geringerer Schichtdicke, insbesondere eine Nitrierverbindungsschicht mit einer Schichtdicke ≤ 1 µm oder keine Nitrierverbindungsschicht. Dies ist ebenfalls für die äußere Umfangsfläche bevorzugt. Diese bevorzugten Ausführungsformen können dadurch hergestellt werden, daß die Oxidschicht und gegebenenfalls auch die Nitrierverbindungsschicht nach dem Nitrier-Oxidationsverfahren mechanisch wieder entfernt werden, z.B. durch Schleifen. Auf diese Weise kann zudem eine niedrige Rauhigkeit der zweiten Flankenfläche erzielt werden und dies hat den Vorteil, daß die zweite Flankenfläche niedrigere Reibwerte und damit im Betrieb einen niedrigeren Verschleiß zeigt, wohingegen die hohe Korrosionsbeständigkeit für die zweite Flankenfläche nicht erforderlich ist.

Bevorzugt beträgt die mittlere Rauhtiefe der zweiten Flankenfläche, zumindest in Teilbereichen ≤ 2 µm, insbesondere ≤ 1,5 µm. Mit der mittleren Rauhtiefe gemäß DIN EN ISO 4287:1998 wird die Rauhigkeit beschrieben. Die mittlere Rauhtiefe der ersten Flankenfläche, d.h. der obersten Oxidschicht ist in der Regel ≥ 2 µm, insbesondere ≥ 2,5 µm, besonders bevorzugt ≥ 3 µm. Weiter ist es bevorzugt, daß das Verhältnis der mittleren Rauhtiefen von erster Flankenfläche zu zweiter Flankenfläche ≥ 1,5:1, insbesondere ≥ 2:1 ist.

Auf der äußeren Umfangsfläche des erfindungsgemäßen Kolbenrings ist auf die Nitrierdiffusionsschicht eine Chrom-Feststoffpartikel-Schicht mit 0,1 - 30 Vol.-% Feststoffpartikeln aufgebracht, die als Verschleißschutzschicht dient. Als Chrom-Feststoffpartikel-Schicht eignen sich Schichten, wie sie beispielsweise in der DE 35 31 410 A1 und der EP 0 217 126 A1 beschrieben sind, in denen die Chromschicht ein Rißnetzwerk aufweist und in deren Risse Feststoffpartikel eingelagert sind. Weiter bevorzugt ist eine strukturierte Chrom-Feststoffpartikel-Schicht, wie beispielsweise in der WO 2009/121443 A1 beschrieben.

Bevorzugte Feststoffpartikel sind solche aus Wolframkarbid, Chromkarbid, Aluminiumoxid, Siliziumkarbid, Siliziumnitrid, Borkarbid, kubischem Bornitrid und/oder Diamant. Vorteilhafte Eigenschaften lassen sich insbesondere durch in die Risse einer solchen elektrochemisch abgeschiedenen Chromschicht eingelagerte Diamantpartikel erreichen, insbesondere Diamantpartikel mit einer Größe im Bereich von 0,25 - 0,4 µm, bestimmt durch Sieben, wie beispielsweise in der WO 2001/004386 A1 und der EP 1 114 209 B1 beschrieben.

Die Korngröße der Feststoffpartikel liegt vorzugsweise im Bereich von 0,01 bis 10 µm, insbesondere im Bereich von 0,1 - 5 µm, und am meisten bevorzugt beträgt die Korngröße 0,2 - 2 µm. Die angegebenen Korngrößen beziehen sich auf den Durchmesser, durch Sieben bestimmt. Der Anteil der Feststoffpartikel in der Chrom-Feststoffpartikel-Schicht beträgt bevorzugt 0,2-10 Vol.-%, insbesondere 0,3 - 8 Vol.%, bezogen auf das Gesamtvolumen der Chrom-Feststoffpartikel-Schicht.

Die Dicke der Chrom-Feststoffpartikel-Schicht ist vorzugsweise ≥ 40 µm, insbesondere 50-100 µm. Bevorzugt weist die äußere Umfangsfläche keine Oxidschicht und besonders bevorzugt keine Oxidschicht und eine Nitrierverbindungsschicht mit deutlich geringerer Schichtdicke, insbesondere eine Nitrierverbindungsschicht mit einer Schichtdicke ≤ 1 µm oder keine Nitrierverbindungsschicht auf. Dadurch wird ein besserer Halt der Chrom-Feststoffpartikel-Schicht erreicht. Wie bei der zweiten Flankenfläche können die Oxidschicht und die Nitrierverbindungsschicht mechanisch entfernt werden.

In einer weiteren Ausführungsform bilden die äußere Umfangsfläche und die erste Flankenfläche sowie die äußere Umfangsfläche und die zweite Flankenfläche jeweils eine umlaufende Außenkante mit einer Abtragung von 0,05 - 0,5 mm aus und der Kolbenring umfaßt an der umlaufenden Außenkanten die Nitrierdiffusionsschicht. Bevorzugt ist es, daß der Kolbenring an der umlaufenden Außenkanten zumindest in Teilbereichen eine über der Nitrierdiffusionsschicht angeordnete Chrom-Feststoffpartikel-Schicht aufweist und eine ebenfalls zumindest in Teilbereichen der umlaufenden Außenkante unmittelbar darüber angeordnete Chromschicht, die keine Feststoffpartikel enthält. Die Bereiche der umlaufenden Außenkanten können, ebenso wie bei der äußeren Umfangsfläche, unabhängig voneinander zumindest teilweise zusätzlich eine Nitrierverbindungsschicht aufweisen. Dies tritt bei der Herstellung insbesondere dann ein, wenn im erfindungsgemäßen Verfahren die Nitrierverbindungsschicht im Bereich der Außenkanten und der Lauffläche nicht vollständig wieder entfernt wird, beispielsweise nicht vollständig abgeschliffen wird.

Unter einer umlaufenden Außenkante oder einer Außenkante in diesem Sinne wird eine Außenkante gemäß DIN ISO 13715 verstanden, wobei eine Abtragung gemäß dieser Norm die innerhalb der ideal-geometrischen Form liegende Abweichung ist. Die Abtragung beträgt in dieser bevorzugten Ausführungsform 0,05 - 0,5 mm, insbesondere 0,1 - 0,2 mm. Die Abtragung kann beispielsweise eine Verrundung oder eine Fase sein.

Beschichtungen im Bereich der Außenkanten erfolgen in der Regel gemeinsam mit der äußeren Umfangsfläche, beispielsweise indem mehrere Kolbenringe aufeinander gestapelt und dann elektrochemisch beschichtet werden. Der Schichtaufbau der Außenkante, umfassend die oben beschriebene Nitrierdiffusionsschicht, die zumindest in Teilbereichen der Außenkante aufgebrachte Chrom-Feststoffpartikel-Schicht und die zumindest in Teilbereichen der Außenkante aufgebrachte, unmittelbar auf der Chrom-Feststoffpartikel-Schicht angeordnete Chromschicht, die keine Feststoffpartikel enthält, weist die Vorteile der Laufflächenbeschichtung auf. Der Kantenbereich von Kolbenringen neigt aber zusätzlich zu einem verstärkten Verschleiß infolge von Rißbildungen in der Beschichtung, die im Kantenbereich auch in Chrom-Feststoffpartikel-Schichten auftreten. Diese Rißbildungen können durch die zusätzliche, auf der Chrom-Feststoffpartikel-Schicht aufgebrachte, Feststoffpartikel-freie Chromschicht im Kantenbereich unterbunden werden. Die Schichtdicke der Chromschicht, die keine Feststoffpartikel enthält, beträgt vorzugsweise 10 - 100 µm, insbesondere 30 - 80 µm.

Ein solcher Kolbenring kann hergestellt werden, indem im Anschluß an den Nitrier-Oxidationsprozeß und die elektrochemische Abscheidung der Chrom-Feststoffpartikel-Schicht auf der äußeren Umfangsfläche, einschließlich der umlaufenden Außenkanten zwischen Flankenflächen und äußerer Umfangsfläche, der Kolbenring in einen wäßrigen Elektrolyt eingebracht wird, der Chrom in Ionenform und keine Feststoffpartikel enthält und elektrochemisch auf die äußere Umfangsfläche und auf den Bereich der umlaufenden Außenkanten eine Chromschicht, insbesondere eine Hartchromschicht abgeschieden wird, die keine Feststoffpartikel enthält.

Weiter ist es erfindungsgemäß bevorzugt, daß die Chromschicht, die keine Feststoffpartikel enthält, auf der Lauffläche zumindest teilweise wieder entfernt wird, beispielsweise mechanisch. Auf diese Weise wird erreicht, daß die Lauffläche an der Oberfläche unmittelbar die besonders verschleißfeste Chrom-Feststoffpartikel-Schicht trägt und im Kantenbereich Ausbrüche durch die zusätzliche Chromschicht ohne Feststoffpartikel vermieden werden.

In einer vorteilhaften Ausgestaltung des erfindungsgemäßen Kolbenrings weist somit die erste Flankenfläche die oben beschriebene Nitrierdiffusionsschicht, die unmittelbar darüber angeordnete Nitrierverbindungsschicht und die unmittelbar darüber angeordnete Oxidschicht auf, die zweite Flankenfläche die Nitrierdiffusionsschicht, gegebenenfalls eine darüber angeordnete Nitrierverbindungsschicht und keine Oxidschicht und die äußere Umfangsfläche die Nitrierdiffusionsschicht, gegebenenfalls eine darüber angeordnete Nitrierverbindungsschicht, und eine unmittelbar darüber angeordnete Chrom-Feststoffpartikel-Schicht auf. Weiter ist im Kantenbereich ein Schichtaufbau aus Nitrierdiffusionsschicht, gegebenenfalls Nitrierverbindungsschicht, Chrom-Feststoffpartikel-Schicht und Feststoffpartikel-freier Chromschicht bevorzugt. Ebenso wie bei äußerer Umfangsfläche und zweiter Flankenfläche weist der Kantenbereich bevorzugt keine Oxidschicht und besonders bevorzugt keine Nitrierverbindungsschicht auf.

Der erfindungsgemäße Schichtaufbau ist insbesondere für sogenannte trapezförmige Kolbenringe geeignet, da trapezförmige Kolbenringe häufig als erster Kolbenring in Dieselmotoren eingesetzt werden, um ein Festgehen durch Verbrennungsrückstände zu vermeiden und in solchen Dieselmotoren durch die hohen Verbrennungsdrücke eine besonders hohe Korrosionsbeständigkeit der dem Brennraum zuwandten Flankenfläche des ersten Kolbenrings wünschenswert ist. Bevorzugt ist es daher, daß die erste Flankenfläche und die zweite Flankenfläche des Grundkörpers jeweils eine ringförmige abgeschrägte Fläche aufweisen, wobei sich die ringförmige abgeschrägte Fläche jeweils an die innere Umfangsfläche anschließt, wobei die ringförmigen abgeschrägten Flächen jeweils mindestens 70 % der Flankenfläche ausmachen, und die Innenwinkel α und β zwischen innerer Umfangsfläche des Grundkörpers und abgeschrägter Fläche jeweils 92°- 115°, bevorzugt 95° - 110°, besonders bevorzugt 97° - 100° betragen. Bevorzugt ist es, daß die abgeschrägte Fläche jeweils mindestens 80 % der Flankenfläche ausmacht.

In einer weiteren bevorzugten Ausführungsform ist nur ein Teil der Flankenflächen abgeschrägt, so daß ein nicht abgeschrägter, ringförmiger Teil der Flankenfläche verbleibt, der auch als Facette bezeichnet wird. Die ringförmige abgeschrägte Fläche der Flankenfläche macht bevorzugt 70 - 95 %, besonders bevorzugt 75 - 92 %, insbesondere 80 - 90 % der jeweiligen Flankenfläche aus. Die nicht abgeschrägte, ringförmige Fläche beträgt bevorzugt 5-30 %, besonders bevorzugt 8-25 %, insbesondere 10- 20 % der jeweiligen Flankenfläche. In dieser Ausführungsform ist es ferner bevorzugt, daß zumindest eine der nicht abgeschrägten ringförmigen Flächen keine Oxidschicht und keine Nitrierverbindungsschicht aufweist. Es können auch beide nicht abgeschrägten ringförmigen Flächen keine Oxidschicht und keine Nitrierverbindungsschicht aufweisen. Weiter ist bevorzugt, daß daß zumindest eine der nicht abgeschrägten ringförmigen Flächen eine Nitrierdiffusionsschicht mit einer Schichtdicke < 5 µm oder keine Nitrierdiffusionsschicht aufweist.

Ein solcher Kolbenring weist genau dort die Vorteile des dreilagigen Schichtaufbaus aus Nitrierdiffusionsschicht, Nitrierverbindungsschicht und Oxidschicht auf, wo die Kombination aus hoher Härte und hoher Korrosionsbeständigkeit wünschenswert ist, weil im wesentlichen nur die abgeschrägten Flächen eines Trapezrings in Kontakt mit der Nut des Kolbens sind und gerade hier die hohe Härte und Korrosionsbeständigkeit die Eigenschaften des Kolbenrings verbessert. Durch die fehlende Oxidschicht und Nitrierverbindungsschicht im Bereich der nicht abgeschrägten Flächen, weist dieser Kolbenring den weiteren Vorteil auf, daß er später effizienter verchromt werden kann, weil durch die fehlende Oxidschicht und Nitrierverbindungsschicht der Stromübergang dort besser ist.

Eine bevorzugte Ausführungsform betrifft somit einen Kolbenring mit einem Grundkörper, der eine innere Umfangsfläche, eine erste Flankenfläche, eine zweite Flankenfläche und eine äußere Umfangsfläche aufweist, wobei die erste Flankenfläche und die zweite Flankenfläche jeweils eine ringförmige abgeschrägte Fläche aufweisen, die sich jeweils an die innere Umfangsfläche anschließt und jeweils 70 - 95 % der Flankenfläche ausmacht, und die Innenwinkel α und β zwischen innerer Umfangsfläche des Grundkörpers und ringförmiger abgeschrägter Fläche jeweils unabhängig voneinander 92°-115° betragen, und der Kolbenring nicht abgeschrägte ringförmige Flächen aufweist, wobei die ringförmigen, abgeschrägten Flächen eine Nitrierdiffusionsschicht mit einer Schichtdicke von 5 - 300 µm, eine unmittelbar darüber angeordnete Nitrierverbindungsschicht mit einer Schichtdicke von 0,5-15 µm und eine unmittelbar darüber angeordnete Oxidschicht mit einer Schichtdicke von 0,05 - 3 µm umfassen, die nicht abgeschrägten, ringförmigen Flächen eine Nitrierdiffusionsschicht mit einer Schichtdicke von 5 - 300 µm aufweisen und zumindest eine der nicht abgeschrägten ringförmigen Flächen keine Oxidschicht und keine Nitrierverbindungsschicht aufweist, und die äußere Umfangsfläche die Nitrierdiffusionsschicht und eine darüber angeordnete Chrom-Feststoffpartikel-Schicht (10) mit 0,1 - 30 Vol.-% Feststoffpartikeln, bezogen auf das Gesamtvolumen der Chrom-Feststoffpartikel-Schicht, umfaßt.

Die einzelnen Schichten auf den Flächen des erfindungsgemäßen Kolbenrings können jeweils einen Teil der Flächen des Kolbenrings bedecken oder die Flächen vollständig bedecken. Insbesondere können die Schichten (Nitrierdiffusionsschicht, Nitrierverbindungsschicht, Oxidschicht, Chrom-Feststoffpartikel-Schicht und Chromschicht, die keine Feststoffpartikel enthält) jeweils 50-100 %, bevorzugt 80-100 % der jeweiligen Fläche bedecken.

Das Verfahren zur Herstellung des erfindungsgemäßen Kolbenrings umfaßt die Schritte, daß der Grundkörper des Kolbenrings (a) in einem kombinierten Nitrier-Oxidationsprozeß unter einer mindestens eine Stickstoffverbindung enthaltenden Atmosphäre auf mindestens 300 °C, vorzugsweise 500 - 800 °C erhitzt wird, anschließend Luft zugeführt und der Kolbenring in Gegenwart der Luft abgekühlt wird, wodurch auf zumindest der ersten Flankenfläche, der zweiten Flankenfläche und der äußeren Umfangsfläche des Kolbenrings eine Nitrierdiffusionsschicht, eine darüber angeordnete Nitrierverbindungsschicht und eine darüber angeordnete Oxidschicht erzeugt wird und (b) der Kolbenring anschließend in einen wäßrigen Elektrolyt eingebracht wird, der Chrom in Ionenform und Feststoffpartikel enthält und auf zumindest die äußere Umfangsfläche elektrochemisch eine Chrom-Feststoffpartikel-Schicht abgeschieden wird.

Als Stickstoffverbindungen eignen sich beispielsweise Stickstoff (N₂) und Ammoniak (NH₃). Bevorzugt wird eine Mischung aus Ammoniak, Wasserstoff (H₂) und Stickstoff eingesetzt. Die elektrochemische Abscheidung der Chrom-Feststoffpartikel-Schicht und der feststoffpartikelfreien Chromschicht können auf herkömmliche, dem Fachmann bekannte Weise erfolgen.

Vor dem Schritt (b) kann in einer bevorzugten Ausführungsform des Verfahrens die Oxidschicht und gegebenenfalls die Nitrierverbindungsschicht auf der äußeren Umfangsfläche und gegebenenfalls der zweiten Flankenfläche wieder entfernt werden, insbesondere im nicht abgeschrägten Flächenteil. Die Oxidschicht und gegebenenfalls die Nitrierverbindungsschicht auf der zweiten Flankenfläche können alternativ auch erst nach dem Verchromen entfernt werden.

Zur Herstellung des erfindungsgemäßen Kolbenrings, der auf den Außenkanten eine feststoffpartikelfreie Chromschicht umfaßt, wird der Kolbenring in den weiteren Schritten (c) in einen wäßrigen Elektrolyt eingebracht wird, der Chrom in Ionenform und keine Feststoffpartikel enthält und elektrochemisch auf die äußere Umfangsfläche und auf den Bereich der umlaufenden Außenkanten eine Chromschicht abgeschieden wird, die keine Feststoffpartikel enthält und (d) die Chromschicht auf der äußeren Umfangsfläche zumindest teilweise mechanisch wieder entfernt wird.

Die Erfindung betrifft auch die Verwendung des erfindungsgemäßen Kolbenrings in einem Verbrennungsmotor. Dazu wird der erfindungsgemäße Kolbenring in dem Fachmann bekannter Weise in einen Kolben eines Verbrennungsmotors eingebracht, bevorzugt als erster, d.h. dem Brennraum am nächsten gelegener Kolbenring.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielhaft anhand der beigefügten Zeichnungen, die auch erfindungswesentliche Merkmale offenbaren, noch näher erläutert.
- Fig. 1: zeigt eine Ausführungsform des erfindungsgemäßen Kolbenrings,
- Fig. 2: zeigt einen Schnitt durch eine Ausführungsform des erfindungsgemäßen Kolbenrings,
- Fig. 3: zeigt einen Schnitt durch eine weitere Ausführungsform des erfindungsgemäßen Kolbenrings.

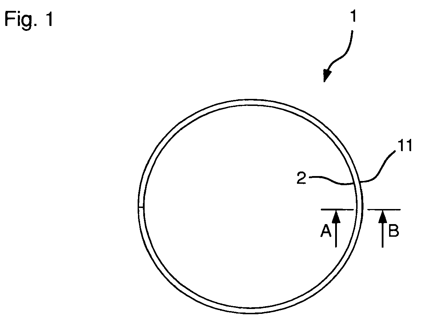

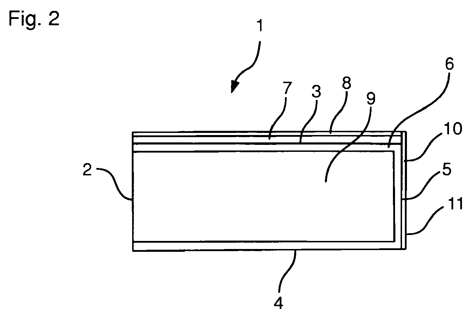

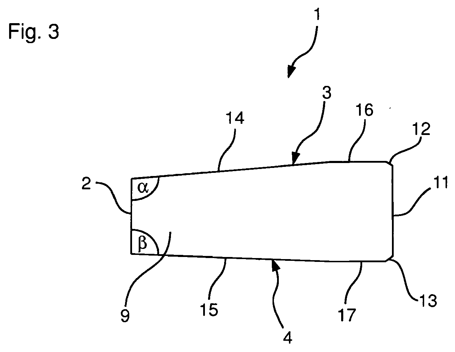

In Fig. 1 ist eine Ausführungsform des erfindungsgemäßen Kolbenrings 1 dargestellt, mit einer inneren Umfangsfläche 2 und einer äußeren Umfangsfläche 11. A und B zeigen eine Schnittachse durch den Kolbenring 1 für die nachfolgenden Figuren 2 und 3.

Fig. 2 zeigt einen Schnitt durch eine Ausführungsform des erfindungsgemäßen Kolbenrings 1 in Richtung der Schnittachse A-B gemäß Fig. 1. Der Kolbenring 1 besteht aus einem metallischen Grundkörper 9, der eine innere Umfangsfläche 2, eine erste Flankenfläche 3, eine zweite Flankenfläche 4 und eine äußere Umfangsfläche 5 aufweist. Die erste Flankenfläche 3, die zweite Flankenfläche 4 und die äußere Umfangsfläche 5 weisen eine Nitrierdiffusionsschicht 6 auf und auf der ersten Flankenfläche 3 sind über der Nitrierdiffusionsschicht 6 eine Nitrierverbindungsschicht 7 und eine Oxidschicht 8 angeordnet. Die Schichtdicken sind lediglich schematisch gezeigt und nicht maßstabsgetreu. Auf der äußeren Umfangsfläche 5 ist auf der Nitrierdiffusionsschicht 6 eine Chrom-Feststoffpartikel-Schicht 10 gezeigt, die die Lauffläche 11 ausbildet.

Fig. 3 zeigt einen Schnitt durch eine weitere Ausführungsform des erfindungsgemäßen Kolbenrings 1, bei der die erste Flankenfläche 3 und die zweite Flankenfläche 4 des Grundkörpers 9 jeweils eine abgeschrägte ringförmige Fläche 14, 15 und eine nicht abgeschrägte ringförmige Fläche 16, 17 aufweisen und die äußere Umfangsfläche 5 und die erste Flankenfläche 3 sowie die äußere Umfangsfläche 5 und die zweite Flankenfläche 4 jeweils eine umlaufende Außenkante 12, 13 ausbilden. Die innere Umfangsfläche 2 und die abgeschrägte Fläche 14 der erste Flankenfläche 3 bilden den Innenwinkel α. Die innere Umfangsfläche 2 und die abgeschrägte Fläche 15 der zweiten Flankenfläche 4 bilden den Innenwinkel β.

## Patentansprüche

1. Kolbenring (1) mit einem Grundkörper (9) aus Chromstahl mit mehr als 10 Gew.-% Chrom, der eine innere Umfangsfläche (2), eine erste Flankenfläche (3), eine zweite Flankenfläche (4) und eine äußere Umfangsfläche (5) aufweist, **dadurch gekennzeichnet, daß** die erste Flankenfläche (3) eine Nitrierdiffusionsschicht (6) mit einer Schichtdicke von 5 - 300 µm, eine unmittelbar darüber angeordnete Nitrierverbindungsschicht (7) mit einer Schichtdicke von 0,5 - 15 µm und eine unmittelbar darüber angeordnete Oxidschicht (8) mit einer Schichtdicke von 0,05 - 3 µm umfaßt, die zweite Flankenfläche (4) die Nitrierdiffusionsschicht (6) und die äußere Umfangsfläche (5) die Nitrierdiffusionsschicht (6) und eine darüber angeordnete Chrom-Feststoffpartikel-Schicht (10) mit 0,1 - 30 Vol.-% Feststoffpartikeln, bezogen auf das Gesamtvolumen der Chrom-Feststoffpartikel-Schicht, umfaßt.

2. Kolbenring nach Anspruch 1, **dadurch gekennzeichnet, daß** die äußere Umfangsfläche (5) und die erste Flankenfläche (3) sowie die äußere Umfangsfläche (5) und die zweite Flankenfläche (4) jeweils eine umlaufende Außenkante (12, 13) mit einer Abtragung von 0,05 - 0,5 mm aufweisen und der Grundkörper (9) im Bereich der umlaufenden Außenkante (12, 13) die Nitrierdiffusionsschicht (6) umfaßt.

3. Kolbenring nach Anspruch 2, **dadurch gekennzeichnet, daß** der Grundkörper (9) zumindest in Teilbereichen der umlaufenden Außenkante (12, 13) eine über der Nitrierdiffusionsschicht (6) angeordnete Chrom-Feststoffpartikel-Schicht (10) mit 0,1 - 30 Vol.-% Feststoffpartikeln, bezogen auf das Gesamtvolumen der Chrom-Feststoffpartikel-Schicht, und eine zumindest in Teilbereichen der umlaufenden Außenkante (12, 13) unmittelbar darüber angeordnete Chromschicht, die keine Feststoffpartikel enthält, umfaßt.

4. Kolbenring nach einem der Ansprüche 1 bis 3, **dadurch gekennzeichnet, daß** die erste Flankenfläche (3) und die zweite Flankenfläche (4) des Grundkörpers (9) jeweils eine ringförmige abgeschrägte Fläche (14, 15) aufweisen, wobei sich die ringförmige abgeschrägte Fläche (14, 15) jeweils an die innere Umfangsfläche (2) anschließt und jeweils mindestens 70 % der Flankenfläche (3, 4) ausmacht, und die Innenwinkel α und β zwischen innerer Umfangsfläche (2) des Grundkörpers und ringförmiger abgeschrägter Fläche (14, 15) jeweils unabhängig voneinander 92°-115°betragen.

5. Kolbenring nach Anspruch 4, **dadurch gekennzeichnet, daß** die ringförmigen, abgeschrägten Flächen (14, 15) jeweils 70 - 95 % der Flankenflächen (3, 4) ausmachen und die erste Flankenfläche (3) und die zweite Flankenfläche (4) zusätzlich jeweils nicht abgeschrägte ringförmige Flächen (16, 17) aufweisen, wobei zumindest eine der nicht abgeschrägten ringförmigen Flächen (16, 17) keine Oxidschicht und keine Nitrierverbindungsschicht aufweist.

6. Kolbenring nach Anspruch 5, **dadurch gekennzeichnet, daß** zumindest eine der nicht abgeschrägten ringförmigen Flächen (16, 17) eine Nitrierdiffusionsschicht (6) mit einer Schichtdicke < 5 µm oder keine Nitrierdiffusionsschicht (6) aufweist.

7. Kolbenring nach einem der Ansprüche 1 bis 6, **dadurch gekennzeichnet, daß** die äußere Umfangsfläche (5) und die zweite Flankenfläche (4) keine Oxidschicht aufweisen.

8. Kolbenring nach einem der Ansprüche 1 bis 7, **dadurch gekennzeichnet, daß** die Oberfläche der zweiten Flankenfläche (4) zumindest teilweise eine mittlere Rauhtiefe ≤ 2 µm und/oder die Oberfläche der ersten Flankenfläche (3) zumindest teilweise eine mittlere Rauhtiefe ≥ 2,5 µm aufweist.

9. Verfahren zur Herstellung eines Kolbenrings nach einem der Ansprüche 1 bis 8, umfassend die Schritte, daß ein metallischer Grundkörper (9) eines Kolbenrings, der eine innere Umfangsfläche (2), eine erste Flankenfläche (3), eine zweite Flankenfläche (4) und eine äußere Umfangsfläche (5) aufweist
(a) in einem kombinierten Nitrier-Oxidationsprozeß unter einer mindestens eine Stickstoffverbindung enthaltenden Atmosphäre auf mindestens 300 °C erhitzt, anschließend Luft zugeführt und der Kolbenring in Gegenwart der Luft abgekühlt wird, wodurch auf zumindest der ersten Flankenfläche, der zweiten Flankenfläche und der äußeren Umfangsfläche eine Nitrierdiffusionsschicht, eine darüber angeordnete Nitrierverbindungsschicht und eine darüber angeordnete Oxidschicht erzeugt wird und
(b) der Kolbenring anschließend in einen wäßrigen Elektrolyt eingebracht wird, der Chrom in Ionenform und Feststoffpartikel enthält und auf zumindest die äußere Umfangsfläche elektrochemisch eine Chrom-Feststoffpartikel-Schicht abgeschieden wird.

10. Verfahren nach Anspruch 9, umfassend zwischen Schritt (a) und (b) den weiteren Schritt, daß die Oxidschicht und gegebenenfalls die Nitrierverbindungsschicht auf der äußeren Umfangsfläche und gegebenenfalls der zweiten Flankenfläche wieder entfernt werden.

11. Verfahren nach Anspruch 9 oder 10, umfassend nach Schritt (b) die weiteren Schritte, daß
(c) der Kolbenring in einen wäßrigen Elektrolyt eingebracht wird, der Chrom in Ionenform und keine Feststoffpartikel enthält und elektrochemisch auf die äußere Umfangsfläche (5) und auf den Bereich der umlaufenden Außenkanten (12, 13) eine Chromschicht abgeschieden wird, die keine Feststoffpartikel enthält, und
(d) die Chromschicht auf der äußeren Umfangsfläche (5) zumindest teilweise mechanisch wieder entfernt wird.

12. Verwendung des Kolbenrings nach einem der Ansprüche 1 bis 8 in einem Verbrennungsmotor.

## Claims

1. Piston ring (1) with a base body (9) of chromium steel with more than 10 wt.-% chromium, which has an inner circumferential surface (2), a first flank surface (3), a second flank surface (4) and an outer circumferential surface (5), **characterized in that** the first flank surface (3) comprises a nitride diffusion layer (6) with a layer thickness of from 5 - 300 µm, a nitride connecting layer (7) arranged directly above this with a layer thickness of from 0.5-15 µm and an oxide layer (8) arranged directly above this with a layer thickness of from 0.05 - 3 µm, the second flank surface (4) comprises the nitride diffusion layer (6), and the outer circumferential surface (5) comprises the nitride diffusion layer (6) and a chromium solid particle layer (10) arranged above this with 0.1 - 30 vol.-% solid particles, relative to the total volume of the chromium solid particle layer.

2. Piston ring according to claim 1, **characterized in that** the outer circumferential surface (5) and the first flank surface (3) as well as the outer circumferential surface (5) and the second flank surface (4) in each case have a circumferential external edge (12, 13) with an abrasion of from 0.05 - 0.5 mm and the base body (9) in the area of the circumferential external edge (12, 13) comprises the nitride diffusion layer (6).

3. Piston ring according to claim 2, **characterized in that** the base body (9) comprises, at least in partial areas of the circumferential external edge (12, 13), a chromium solid particle layer (10), arranged above the nitride diffusion layer (6), with 0.1 - 30 vol.-% solid particles, relative to the total volume of the chromium solid particle layer, and a chromium layer which does not contain any solid particles and is arranged directly above this, at least in partial areas of the circumferential external edge (12, 13).

4. Piston ring according to one of claims 1 to 3, **characterized in that** the first flank surface (3) and the second flank surface (4) of the base body (9) in each case have a ring-shaped bevelled surface (14, 15), wherein the ring-shaped bevelled surface (14, 15) in each case is connected to the inner circumferential surface (2) and in each case makes up at least 70% of the flank surface (3, 4), and the internal angles α and β between the inner circumferential surface (2) of the base body and the ring-shaped bevelled surface (14, 15) in each case independently of each other are 92° - 115°.

5. Piston ring according to claim 4, **characterized in that** the ring-shaped, bevelled surfaces (14, 15) in each case make up 70 - 95% of the flank surfaces (3, 4) and the first flank surface (3) and the second flank surface (4) additionally in each case have non-bevelled ring-shaped surfaces (16, 17), wherein at least one of the non-bevelled ring-shaped surfaces (16, 17) does not have an oxide layer and does not have a nitride connecting layer.

6. Piston ring according to claim 5, **characterized in that** at least one of the non-bevelled ring-shaped surfaces (16, 17) has a nitride diffusion layer (6) with a layer thickness < 5 µm or does not have a nitride diffusion layer (6).

7. Piston ring according to one of claims 1 to 6, **characterized in that** the outer circumferential surface (5) and the second flank surface (4) do not have an oxide layer.

8. Piston ring according to one of claims 1 to 7, **characterized in that** the surface of the second flank surface (4) has, at least in parts, an average peak-to-valley height ≤ 2 µm and/or the surface of the first flank surface (3) has, at least in parts, an average peak-to-valley height ≥ 2.5 µm.

9. Method for producing a piston ring according to one of claims 1 to 8, comprising the steps in which a metallic base body (9) of a piston ring which has an inner circumferential surface (2), a first flank surface (3), a second flank surface (4) and an outer circumferential surface (5)
(a) is heated to at least 300°C in a combined nitriding-oxidation process under an atmosphere containing at least one nitrogen compound, then air is added to it and the piston ring is cooled in the presence of the air, whereby a nitride diffusion layer, a nitride connecting layer arranged above this and an oxide layer arranged above this are produced on at least the first flank surface, the second flank surface and the outer circumferential surface, and
(b) the piston ring is then introduced into an aqueous electrolyte which contains chromium in ion form and solid particles, and a chromium solid particle layer is deposited electrochemically onto at least the outer circumferential surface.

10. Method according to claim 9, comprising, between step (a) and (b), the further step in which the oxide layer and optionally the nitride connecting layer on the outer circumferential surface and optionally on the second flank surface are removed again.

11. Method according to claim 9 or 10, comprising, after step (b), the further steps in which
(c) the piston ring is introduced into an aqueous electrolyte which contains chromium in ion form and does not contain any solid particles, and a chromium layer which does not contain any solid particles is deposited electrochemically onto the outer circumferential surface (5) and onto the area of the circumferential external edges (12, 13) and
(d) the chromium layer on the outer circumferential surface (5) is at least partially removed again mechanically.

12. Use of the piston ring according to one of claims 1 to 8 in an internal combustion engine.

## Revendications

1. Segment de piston (1) comprenant un corps de base (9) en acier au chrome contenant plus de 10 % en poids de chrome, qui comprend une face périphérique intérieure (2), une première face latérale (3), une deuxième face latérale (4) et une face périphérique extérieure (5), **caractérisé en ce que** la première face latérale (3) comprend une couche de diffusion en nitruration (6) ayant une épaisseur de couche de 5 à 300 µm, une couche de liaison en nitruration (7), disposée directement par-dessus, ayant une épaisseur de couche de 0,5 à 15 µm, et une couche d'oxyde (8), disposée directement par-dessus, ayant une épaisseur de couche de 0,05 à 3 µm, la deuxième face latérale (4) comprenant la couche de diffusion en nitruration (6); et la face périphérique extérieure (5) la couche de diffusion en nitruration (6) et une couche (10) de chrome-particules solides, disposée par-dessus, contenant 0,1 à 30 % en volume de particules solides par rapport au volume total de la couche de chrome-particules solides.

2. Segment de piston selon la revendication 1, **caractérisé en ce que** la face périphérique extérieure (5) et la première face latérale (3), ainsi que la face périphérique extérieure (5) et la deuxième face latérale (4), comprennent chacune une arête extérieure périphérique (12, 13) avec une érosion de 0,05 à 0,5 mm, et le corps de base (9) comprend, dans la zone de l'arête extérieure périphérique (12, 13), la couche de diffusion en nitruration (6).

3. Segment de piston selon la revendication 2, **caractérisé en ce que** le corps de base (9) comprend, au moins dans des zones partielles de l'arête extérieure périphérique (12, 13), une couche (10) de chrome-particules solides, disposée par-dessus la couche de diffusion en nitruration (6), contenant 0,1 à 30 % en volume de particules solides, par rapport au volume total de la couche de chrome-particules solides, et une couche de chrome, disposée directement par-dessus au moins dans des zones partielles de l'arête extérieure périphérique (12, 13), couche qui ne contient aucune particule solide.

4. Segment de piston selon l'une des revendications 1 à 3, **caractérisé en ce que** la première face latérale (3) et la deuxième face latérale (4) du corps de base (9) présentent chacune une face biseautée annulaire (14, 15), chacune des faces biseautées annulaires (14, 15) se poursuivant par la face périphérique intérieure (2), et représentant chacune au moins 70 % de la face latérale (3, 4), et chacun des angles intérieurs α et β entre la face périphérique intérieure (2) du corps de base et la face biseautée annulaire (14, 15) valent, chacun indépendamment de l'autre, 92 à 115°.

5. Segment de piston selon la revendication 4, **caractérisé en ce que** chacune des faces biseautées annulaires (14, 15) représente 70 à 95 % des surfaces latérales (3, 4), et en outre la première face latérale (3) et la deuxième face latérale (4) comprennent chacune des faces annulaires non biseautées (16, 17), au moins l'une des faces annulaires non biseautées (16, 17) ne comprenant pas de couche d'oxyde et ne comprenant pas de couche de liaison en nitruration.

6. Segment de piston selon la revendication 5, **caractérisé en ce qu'**au moins l'une des faces annulaires non biseautées (16, 17) comprend une couche de diffusion en nitruration (6) ayant une épaisseur de couche < 5 µm ou ne comprend aucune couche de diffusion en nitruration (6).

7. Segment de piston selon l'une des revendications 1 à 6, **caractérisé en ce que** la face périphérique extérieure (5) et la deuxième face latérale (4) ne comprennent aucune couche d'oxyde.

8. Segment de piston selon l'une des revendications 1 à 7, **caractérisé en ce que** la surface de la deuxième face latérale (4) présente au moins partiellement une profondeur moyenne de rugosité ≤ 2 µm, et/ou la surface de la première face latérale (3) présente au moins partiellement une profondeur moyenne de rugosité ≥ 2,5 µm.

9. Procédé de fabrication d'un segment de piston selon l'une des revendications 1 à 8, comprenant les étapes selon lesquelles un corps de base métallique (9) d'un segment de piston, qui comprend une face périphérique intérieure (2), une première face latérale (3), une deuxième face latérale (4) et une face périphérique extérieure (5),
(a) est, dans une opération combinée de nitruration-oxydation, sous une atmosphère contenant au moins un composé azoté, chauffé à au moins 300°C, puis de l'air est amené, et le segment de piston est refroidi en présence de l'air, ce en conséquence de quoi une couche de diffusion en nitruration, une couche de liaison en nitruration disposée par-dessus et une couche d'oxyde disposée par-dessus, sont produites sur au moins la première face latérale, la deuxième face latérale et la face périphérique extérieure, et
(b) le segment de piston est ensuite introduit dans un électrolyte aqueux, qui contient du chrome sous forme ionique et des particules solides, et une couche de chrome-particules solides est déposée par voie électrochimique sur au moins la face périphérique extérieure.

10. Procédé selon la revendication 9, comprenant entre les étapes (a) et (b) l'étape supplémentaire selon laquelle la couche d'oxyde et éventuellement la couche de liaison en nitruration se trouvant sur la face périphérique extérieure et éventuellement sur la deuxième face latérale, sont de nouveau éliminées.

11. Procédé selon la revendication 9 ou 10, comprenant après l'étape (b) les étapes supplémentaires selon lesquelles :
(c) le segment de piston est introduit dans un électrolyte aqueux qui contient du chrome sous forme ionique et ne contient aucune particule solide, et une couche de chrome qui ne contient aucune particule solide est déposée par voie électrochimique sur la face périphérique extérieure (5) et sur la zone des arêtes extérieures périphériques (12, 13), et
(d) la couche de chrome se trouvant sur la face périphérique extérieure (5) est au moins partiellement de nouveau éliminée par voie mécanique.

12. Utilisation du segment de piston selon l'une des revendications 1 à 8 dans un moteur à combustion interne.
